# EUROPEAN PATENT APPLICATION

(11) **EP 4 008 436 A1**
(43) Date of publication of application: **08.06.2022**
(21) Application number: 20211632.3
(22) Date of filing: 03.12.2020
(51) Int. Cl.: B01L 7/00, G05B 13/02, G05D 23/19

(54) **DEVICE FOR AMPLIFYING AND DETECTING BIOLOGICAL MATERIAL**

(71) Applicant: Max-Planck-Gesellschaft zur Förderung der Wissenschaften e.V., 80539 München (DE)
(72) Inventor: The designation of the inventor has not yet been filed
(74) Representative: Vossius & Partner Patentanwälte Rechtsanwälte mbB

(57) **Abstract**

The invention relates to a device to be used in amplifying and detecting biological material. In particular, the present invention relates to a device used for detecting methods, e.g., loop-mediated isothermal amplification, which may reveal the presence of a particular pathogen or molecule in a biological sample. The biological sample may be a human biological sample, but could also be a sample from an animal or plant.

## Description

### BACKGROUND OF THE INVENTION

The invention relates to a device to be used in amplifying and detecting biological material. In particular, the present invention relates to a device used for detecting methods, e.g., loop-mediated isothermal amplification, which may reveal the presence of a particular pathogen or molecule in a biological sample. The biological sample may be a human biological sample, but could also be a sample from an animal or plant. The biological material may be genomic material. The device may have low energy requirements.

Loop-mediated isothermal amplification (LAMP) is a technique used to amplify DNA or RNA and a low-cost method to detect certain diseases. Other devices for amplifying genomic material can be based on the polymerase chain reaction (PCR).

The amplification of genomic material, in particular via LAMP and PCR, gained attention also in light of the COVID-19 outbreak. One of the significant challenges in an epidemic is quickly understanding how an infectious disease spreads through a population. Without comprehensive data, appropriate measures to counter the spread are delayed or cannot be implemented effectively. By enabling early diagnosis and generally lowering the barrier to test for diseases, many types of diseases can be treated at an early stage or prevented from further transmission, which can make a lifesaving difference.

For this reason, diagnostic devices that can deliver reliable and fast results are desired. It is also desirable for such diagnostic devices to be suitable for use at a point of care or even autonomously by the patient (e.g., in a private household).

It is desired for such devices to be easily operable and/or automated so that the labour required for the diagnostic procedure is reduced, increasing the overall testing capacity. It is particularly convenient for patients themselves if the devices operate largely independently.

Furthermore, reducing the complexity of the procedure for the user and the cost of a testing device are important factors for broader accessibility. It is desirable that the testing can be conducted not only in a laboratory, but also remotely. In particular, it is believed that a portable and/or relatively small (e.g., hand-held) device would allow for wide distribution and use.

Portable devices for amplifying and detecting biological material are known. For example, Phillips et al., "Microfluidic rapid and autonomous analytical device (microrad) to detect HIV from blood samples", Lab on Chip, 2019:20 (DOI: 10.1039/C9LC00506D) discloses a portable device for reverse-transcription loop-mediated isothermal amplification.

It is believed that further improvements to power management and/or sample heating in such devices would be desirable.

### SUMMARY OF THE INVENTION

It is an objective of the present invention to provide an improved device for amplifying and detecting biological material. More specifically, it is an objective of the present invention to provide a device for amplifying and detecting biological material with enhanced power management and/or sample heating.

According to a first aspect of the present invention, a device for amplifying and detecting biological material in a biological sample comprises a heating arrangement for heating the sample. The heating arrangement comprises a first heating element, a second heating element, a first controller for the first heating element, and a second controller for the second heating element. The device further comprises an interface to a power source, the power source providing an available source voltage and an available source power to the device. The device is configured to determine power values for the heating elements by a method comprising the following steps:
a) A step of setting a second heating element power as determined by a predetermined pulse width of current pulses for the second heating element.
b) A step of ramping up a first heating element power as determined by a pulse width of current pulses for the first heating element by incrementally increasing the pulse width for the first heating element.
c) After ramping up the first heating element power, a step of checking the available source voltage, a step of checking whether the available source power decreases, and a step of checking whether a predetermined maximum first heating element power value is reached. Preferably, all three conditions are checked. However, checking two of these conditions may be sufficient in some cases.
d) Iterating the step of ramping up the first heating element power if the available source voltage is above a first predetermined minimum voltage, the available source power has not decreased, and the first heating element power is below the predetermined maximum first heating element power value.
e) Storing a value of the first heating element power. Preferably, said value is stored when at least one of the following conditions is fulfilled: the available source voltage drops below the first predetermined minimum voltage, or the available source power decreases, or the first heating element power reaches the predetermined maximum first heating element power value. Preferably, said value is a present value of the first heating element power. Preferably, said value of the first heating element power is set as a first heating element power value for heating a biological sample, as explained in more detail below.

The steps may be performed in the order stated above.

Setting the second heating element power with the predetermined pulse width and ramping up the first heating element power allows the device to determine the optimal level of power to be used from a limited power source, which may subsequently be used to supply the heating elements. In this manner, it can be assessed how much power is available and can be used by the first heating element safely and efficiently without leading to a malfunction of the device.

Preferably, the predetermined maximum first heating element power value is at least 2.0 Watt.

Preferably, the second heating element power is set to at least 0.1 Watt, preferably at least 1.0 Watt. Such power values are believed to allow for efficient heating of the relevant biological samples.

The device may include a voltage doubler.

The first predetermined minimum voltage may be set to a value sufficient for operating a microcontroller of the device. For example, the first predetermined minimum voltage may be set to at least 3.1 Volt, preferably at least 3.8 Volt, more preferably at least 4.0 Volt. In this manner, a microcontroller operating at, for example 3.3 Volt may be employed (e.g., if the first predetermined minimum voltage is at least 3.3 Volt, or preferably 3.8 Volt to provide adequate reserve). A microcontroller operating at 5 Volt may be employed, for example if a voltage doubler is incorporated into the device (e.g., if the first predetermined minimum voltage is at least 3.1 Volt and doubled, thus providing adequate reserve), or if the first predetermined minimum voltage is at least 5 Volt.

The method may include a further step of checking the available source voltage before the step of ramping up the first heating element power. The device may be configured to abort the method for determining power values when the available source voltage is below a second predetermined minimum voltage, preferably when the available source voltage is below 4.0 Volt, preferably below 3.8 Volt, more preferably below 3.1 Volt. This may avoid performing the further method steps when it is already foreseeable that the available source power will not be sufficient.

According to a second aspect of the present invention, a device for amplifying and detecting biological material in a biological sample comprises a heating arrangement for heating the sample. The heating arrangement comprises a first heating element, a second heating element, a first controller for the first heating element, and a second controller for the second heating element. The device further comprises an interface to a power source, the power source providing an available source voltage and an available source power to the device. The device is configured to heat up the sample by a method comprising following steps:
a) Heating up the first heating element based on a set first heating element power value as determined by a pulse width of current pulses for the first heating element.
b) Heating up the second heating element based on a second heating element power as determined by a pulse width of current pulses for the second heating element.
c) A step of calculating or retrieving
   (i) a temperature inflection point for the first heating element, and/or
   (ii) a pulse width reduction rate to be applied upon reaching a first predetermined temperature.
d) A step of checking a present temperature in the heating arrangement.
e) A step of incrementally decreasing the pulse width of current pulses for the first heating element upon
   (i) the present temperature reaching the temperature inflection point, and/or
   (ii) the present temperature reaching the first predetermined temperature.
f) Iterating the steps of checking the present temperature and incrementally decreasing the pulse width of the first heating element until the present temperature in the heating arrangement reaches a second predetermined temperature.
g) Controlling the second heating element power by the second controller to maintain a predetermined target temperature of the biological sample. Preferably, the second controller is a proportional integral differential (PID) controller.

Steps e) to g) may be performed in the stated order. Step d) may be performed before step e).

Steps a) to c) may be performed before steps d) to g).

It is desired for the biological sample to be heated up rapidly but also accurately and reliably. Controlling the temperature with two heating elements that fulfill different functions, as described above, is believed to be helpful in this respect. The temperature inflection point for the first heating element and/or the pulse width reduction rate may be calculated, or alternatively retrieved, e.g., from a memory. Initially, both heating elements may heat up using respective set power values until the temperature inflection point and/or the first predetermined temperature is reached. Then, the power supplied to the first heating element is incrementally decreased to a lower level. Without wanting to be bound by theory, it is believed that this may allow to reach the target temperature in a relatively fast and stable manner with minimal overshooting.

Preferably, the method comprises, for example, after step f), a step of decreasing the pulse width of current pulses for the first heating element to a predetermined first heating element power value. This may be done upon reaching a predetermined power threshold and/or upon reaching the second predetermined temperature. This may avoid the controllers from interfering with each other. For example, the first heating element may be turned off. Alternatively, the pulse width of current pulses for the first heating element may be decreased so that the first heating element delivers 5% to 80% of the power necessary to maintain the predetermined target temperature of the biological sample.

The predetermined first heating element power value may be less than 80%, preferably less than 50%, of the set first heating element power value.

The predetermined first heating element power value may be less than 100%, preferably less than 80%, of the set second heating element power value.

Once the target temperature is reached, fine-tuning or maintaining the temperature may be achieved by the second heating element controlled by the PID controller.

According to a third aspect of the present invention, the first and second aspects may be combined. In particular, a device for amplifying and detecting biological material according to the second aspect described above may be configured to determine the set first heating element power value in accordance with the method described for the first aspect above. In other words, such device may first perform the method described for the first aspect, determine thereby the set first heating element power value and then, subsequently, perform the method described for the second aspect. This provides for an automatic determination of the available power and efficient use of said available power for heating up the sample in a fast and accurate manner, with minimal intervention by the user being required.

In accordance with all of the above-mentioned aspects, the device may be configured to receive a container containing the biological sample and associated reagents in the heating arrangement. Associated reagents may be, for example, primers for a LAMP or PCR reaction. The device may be configured to heat the sample to the predetermined target temperature when received in the heating arrangement.

The device may be configured so that the pulse width of current pulses for the second heating element has an initial duty cycle of at least 50%, more preferably at least 80% or even 100%. For a rapid heating process, the maximum available power may be used to supply the second heating element.

The method may further comprise a step of maintaining the pulse width of current pulses for the second heating element at a duty cycle of at least 50%, more preferably at least 80% or even 100% (e.g., at the initial duty cycle) until reaching the first predetermined temperature. For example, the pulse width of current pulses for the second heating element may be maintained at such duty cycle after the step of checking the present temperature in the heating arrangement. Maintaining such duty cycle would provide the maximum amount of power for the second heating element.

Preferably, the first predetermined temperature is 1 °C to 10 °C below, preferably 1 °C to 5 °C below, the predetermined target temperature. By having the first predetermined temperature below the predetermined target temperature, overshooting of the temperature may be minimised or prevented.

As noted above, the pulse width of current pulses for the first heating element may be decreased to a predetermined first heating element power value upon reaching the second predetermined temperature. The second predetermined temperature may be within a range of from 0 °C to 10 °C below the target temperature, preferably within a range of from 2 °C to 4 °C, below the target temperature. Alternatively or additionally, the predetermined power threshold may be relied upon. In this case, the predetermined power threshold may be at least 2 Watt, preferably 4 Watt.

The predetermined target temperature of the biological sample may be within a range from 55 °C to 80 °C, preferably within a range of from 60 °C to 75 °C. The device may be configured to reach and maintain temperatures within these ranges. Most processes for amplifying and detecting biological material are preferably carried out in these temperature ranges. However, it should be noted that also other appropriate temperature ranges may be reached using the same methods.

For amplifying and detecting biological material, it is preferred for the device to be configured to equalise the temperature of the biological sample for 30 min to 60 min in a range of 55 °C to 80 °C, preferably 60 °C to 75 °C, more preferably at about 64 °C.

As indicated above, the device may comprise a microcontroller and/or a memory. A virtual or programmable controller, e.g. a PID controller, may be provided by the microcontroller and/or saved in the memory in order to fulfil the above-mentioned functionalities. Therefore, a hardwired controller is not necessarily required.

The device may be configured to perform one or more measurements of the sample. Preferably, several measurements are performed at different time points. In LAMP or PCR, changes in fluorescence, turbidity of and/or light transmission through the sample and/or container may be indicative of whether a certain pathogen or molecule is present in the sample. The device may be configured to display the result of the analysis and/or an error after analysing one or more measurements.

Measurement may be taken at predetermined time intervals, e.g. once every minute. This may lower the necessary computing capacity, without noticeably compromising performance of the device.

Furthermore, the device may be configured to perform one or more measurements of a background behind the sample and/or the container. The results of these measurements may be stored. Background measurements may be used for correction of sample measurement results, if desired.

Measurement results may be stored, for example, as volatile variables, e.g. in the memory of the microcontroller. A plurality of measurement results taken over the time of a measurement may be stored in a volatile array.

For example, the device may indicate the presence (positive result) of a certain pathogen (e.g., a certain virus) or molecule (e.g., protein) when fluorescent values rise in a certain manner (e..g., Boltzmann function) within a certain time after the sample has been heated to the target temperature. The pathogen (e.g., viral) load may be determined by the time-point when the increase in fluorescence starts. To obtain this value reliably, a numerical approximation based on the Navier-Stokes equation to find the interception of the tangent to the Boltzmann function with the time axis may be employed. This is equivalent of adjusting a tangent to the inflection point of the Boltzmann function. The numerical approach may be as follows:
(i) Determine the steepest tangent to the Boltzmann curve, and determine where this tangent intersects the time axis.
(ii) From this time point, the viral load concentration can be estimated assessing the time point at which the differential increase in temperature starts to decrease.

While this method for assessing the viral load is advantageous in the context of the second and third aspects because it allows for a simple and efficient determination of the viral load, it is noted that this method for assessing the viral load may also form an independent aspect of the present disclosure. In particular, this method for assessing the viral load may also be employed in conjunction with other heating arrangements than those described above and independently of the methods for controlling the first and second heating elements that have been described for the first to third aspect.

The power source of the device according to any of the above-mentioned aspects may be a mobile device, a computer, a solar panel, or a battery. Preferably, the power source supplies the source voltage and source power via bus connector (e.g., a universal serial bus connector, a Lightning connector, a Thunderbolt connector, a DisplayPort or the like). This may allow for a flexible use of the device and connection to a variety of power sources.

The device according to any of the above-mentioned aspects may further comprise a display (e.g., a matrix-LCD or OLED display) to display one or more results of the analysis (e.g., a positive or negative result and/or a viral load) or to indicate an error. Alternatively or additionally, the results or the error may be displayed on a smartphone, preferably in a dedicated app, preferably wherein the results or error are communicated to the smartphone by wireless transmission. Providing a user-friendly interface can support a less experienced person to operate the device without difficulty.

The invention does also encompass corresponding methods for assessing available power at a power source (in particular, at a power source to which connection is made by a bus connector, a USB connector, a Lightning connector, a Thunderbolt connector, a DisplayPort or the like), regardless of the particular type of device. Moreover, it will be appreciated that these methods may also be used with other devices than devices for amplifying and detecting biological material, in particular with other devices connected to a USB power source or the like.

### BRIEF DESCRIPTION OF THE DRAWINGS

The invention will be described in more detail with reference to the figures below. These figures disclose embodiments of the invention for illustrational purposes only. In particular, the disclosure provided by the figures is not meant to limit the scope of protection conferred by the invention.
Fig. 1 is a schematic block diagram showing a ramping up process in accordance with an embodiment of the present invention.
Fig. 2 is a schematic block diagram showing a heating up process in accordance with a further embodiment of the present invention.
Fig. 3 is a schematic diagram showing a power of a first heating element and a second heating element during the heating up process.
Fig. 4 is a schematic diagram showing a temperature curve of a heating arrangement during the heating up process.
Fig. 5 is a schematic diagram showing exemplary components of devices in accordance with embodiments of the present invention.

### DETAILED DESCRIPTION

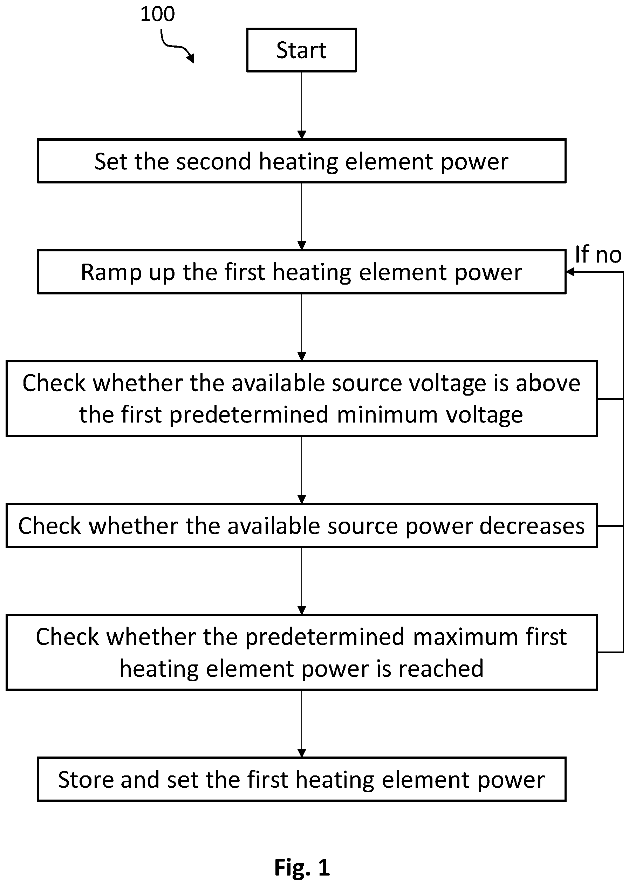

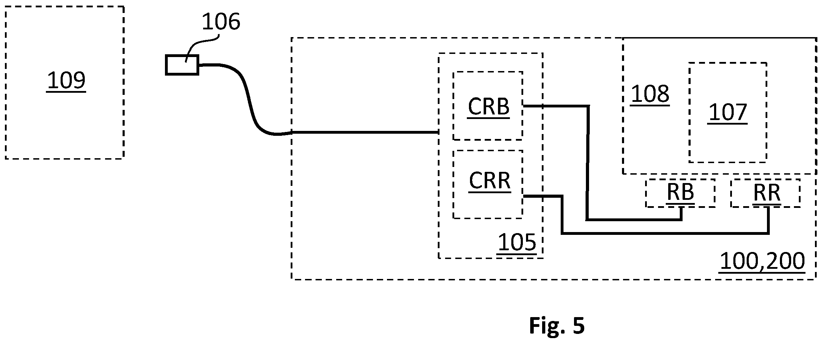

Figs. 1 and 5 schematically illustrate a device (100) according to the first aspect of the present invention. The device (100) for amplifying and detecting biological material in a biological sample comprises a heating arrangement for heating the sample. The heating arrangement comprises a first heating element (RB), a second heating element (RR), a first controller (CRB) for the first heating element (RB), and a second controller (CRR) for the second heating element (RR). The device further comprises an interface (106) to a power source (109), the power source (109) providing an available source voltage and an available source power to the device (100). The interface (106) may be a bus cable, such as a USB cable or a Lightning cable. The device (100) further comprises a compartment (108) configured to receive the sample, e.g. within a sample container (107).

The first controller (CRB) and the second controller (CRR) may be provided by a single microcontroller (105). Alternatively, separate controllers, e.g. separate microcontrollers, may be used.

The device is configured to determine power values for the heating elements (RB, RR) by a method comprising the steps shown in Fig. 1.

The method begins with a step of setting a second heating element power as determined by a predetermined pulse width of current pulses for the second heating element (RR).

Subsequently, a step of ramping up a first heating element power as determined by a pulse width of current pulses for the first heating element (RB) by incrementally increasing the pulse width for the first heating element (RB) is performed.

This is followed by a step of checking the available source voltage after the step of ramping up the first heating element power, a step of checking whether the available source power decreases, and a step of checking whether a predetermined maximum first heating element power value is reached. The step of ramping up the first heating element power is iterated if the available source voltage is above a first predetermined minimum voltage, and the available source power has not decreased, and the first heating element power is below the predetermined maximum first heating element power value.

Subsequently, a present first heating element power value is stored and set as a set first heating element power value when at least one of the following conditions is fulfilled: the available source voltage is below the first predetermined minimum voltage, or the available source power decreases, or the first heating element power reaches the predetermined maximum first heating element power value.

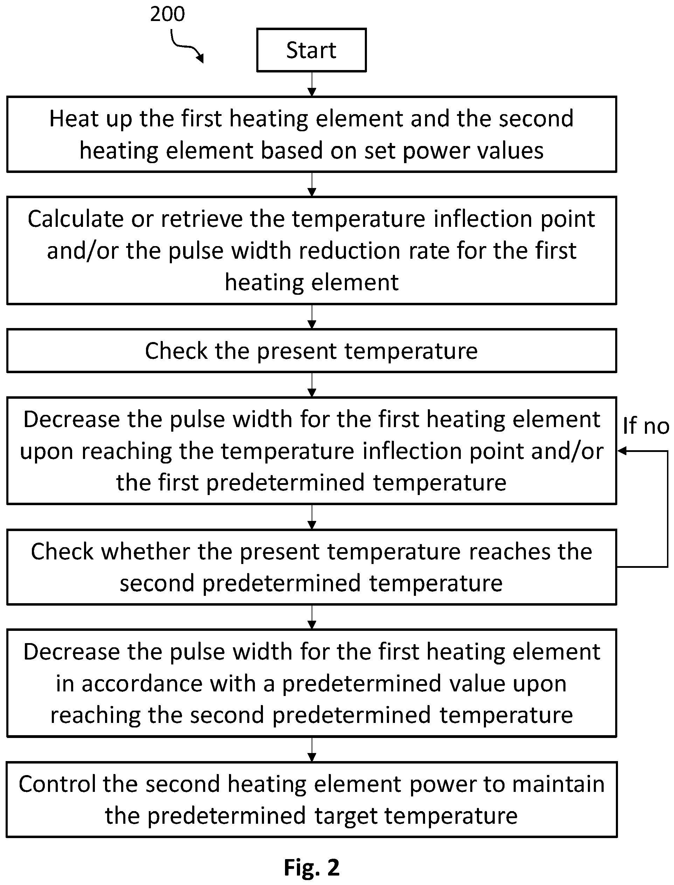

Figs. 2 and 5 schematically illustrate a device (200) for amplifying and detecting biological material in a biological sample according to a second aspect of the present invention. As with the device (100) addressed with reference to Fig. 1, the device (200) comprises a heating arrangement for heating the sample. The heating arrangement comprises a first heating element (RB), a second heating element (RR), a first controller (CRB) for the first heating element (RB), a second controller (CRR) for the second heating element (RR). The device further comprises an interface (106) to a power source (109), the power source providing an available source voltage and an available source power to the device. The interface (106) may be a bus cable, such as a USB cable or a Lightning cable. The device (200) further comprises a compartment (108) configured to receive the sample, e.g. within a sample container (107).

The device (200) is configured to heat up the sample by a method comprising the steps shown in Fig. 2.

The method begins with a step of heating up the first heating element (RB) based on a set first heating element power value as determined by a pulse width of current pulses for the first heating element (RB), and heating up the second heating element (RR) based on a second heating element power as determined by a pulse width of current pulses for the second heating element (RR).

Subsequently, a step of calculating and/or assessing a temperature inflection point for the first heating element (RB) is performed. Alternatively or additionally, a pulse width reduction rate to be applied upon reaching a first predetermined temperature is calculated and/or assessed. Alternatively, the temperature inflection point for the first heating element and/or the pulse width reduction rate may be retrieved, e.g., from a memory. This is followed by a step of checking a present temperature in the heating arrangement and a step of incrementally decreasing the pulse width of current pulses for the first heating element (RB) upon the present temperature reaching the temperature inflection point and/or upon reaching the first predetermined temperature. The steps of checking the present temperature and incrementally decreasing the pulse width of the first heating element (RB) are then iterated until the present temperature in the heating arrangement reaches a second predetermined temperature.

Subsequently, the pulse width of current pulses for the first heating element (RB) is decreased in accordance with and/or to a predetermined value upon reaching a predetermined power threshold and/or the second predetermined temperature. The second heating element power is then controlled by the second controller, wherein the second controller is a PID controller, to maintain a predetermined target temperature of the biological sample.

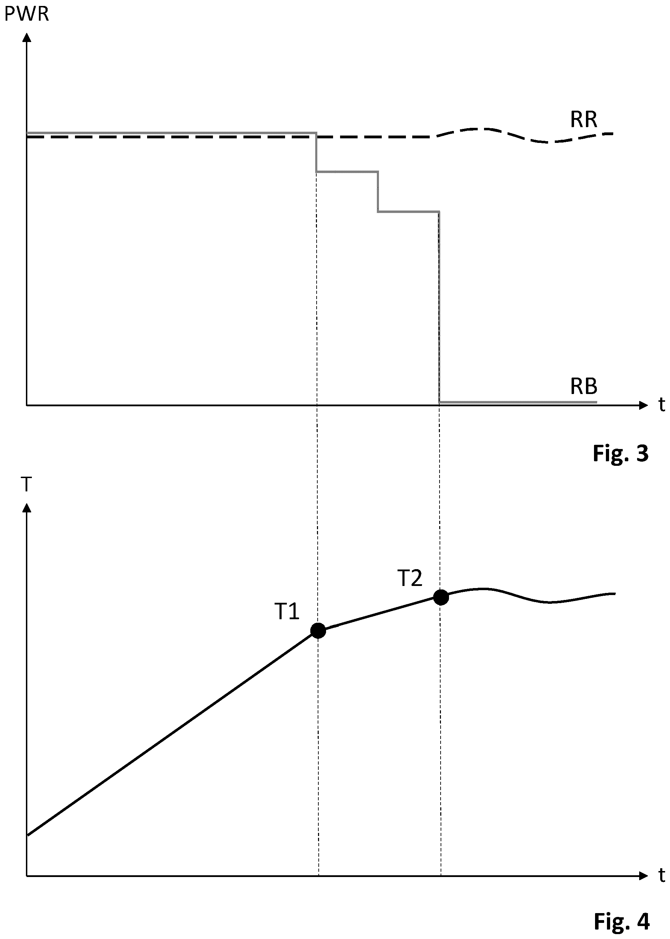

Fig. 3 schematically illustrates the power curves (PWR on Y-axis) of a first heating element (RB) and a second heating element (RR) over the course of time (t on X-axis). As described for the second aspect, the first and second heating elements may be supplied with set power values, which do not necessarily have to be at similar levels as illustrated. Upon reaching a temperature inflection point and/or a first predetermined temperature (see T1 in Fig. 4), which may be calculated or retrieved by the device, the first heating element power is decreased incrementally. Then, upon reaching a second predetermined temperature (T2) and/or a predetermined power threshold, the first heating element power decreases to a, preferably constant, lower level. The second heating element (RR) and its PID controller are then used to maintain the temperature of the sample within the desired range.

Fig. 4 schematically illustrates the temperature curve (T on Y-axis) of a heating arrangement over the course of time (t on X-axis). As described for the second aspect, a first heating element (RB) and a second heating element (RR) are heated up rapidly based on the set power values, until a temperature inflection point and/or a first predetermined temperature (T1) is reached. After this, the gradient of the curve gets lower due to the incremental decrease of the first heating element power until reaching the second predetermined temperature and/or a predetermined power threshold. Finally, a predetermined target temperature is maintained using the second heating element (RR) and its PID controller.

The invention may be defined, for example, by the following aspects:
1. A device for amplifying and detecting biological material, e.g. loop-mediated isothermal amplification, of a biological sample, comprising a heating arrangement for heating the sample, the heating arrangement comprising a first heating element (RB), a second heating element (RR), a first controller for the first heating element (CRB), a second controller for the second heating element (CRR), an interface to a power source, the power source providing an available source voltage and an available source power to the device, wherein the device is configured to determine power values for the heating elements by a method comprising:
   - a step of setting a second heating element power as determined by a predetermined pulse width of current pulses for the second heating element (RR);
   - a step of ramping up a first heating element power as determined by a pulse width of current pulses for the first heating element (RB) by incrementally increasing the pulse width for the first heating element (RB);
   - a step of checking the available source voltage after the step of ramping up the first heating element power;
   - a step of checking whether the available source power decreases;
   - a step of checking whether a predetermined maximum first heating element power value is reached;
   - iterating the step of ramping up the first heating element power if the available source voltage is above a first predetermined minimum voltage, and the available source power has not decreased, and the first heating element power is below the predetermined maximum first heating element power value; and
   - a step of storing and setting a present first heating element power as a set first heating element power value when at least one of the following conditions is fulfilled:
      the available source voltage is below the first predetermined minimum voltage, or the available source power decreases, or the first heating element power reaches the predetermined maximum first heating element power value.
2. The device according to aspect 1, wherein the predetermined maximum first heating element power value is at least 2.0 Watt
3. The device according to aspect 1 or 2, wherein the second heating element power is set to at least 0.1 Watt, preferably at least 1.0 Watt.
4. The device according to any one of aspects 1-3, wherein the first predetermined minimum voltage is set to at least 3.1 Volt, preferably 3.8 Volt, more preferably 4.0 Volt.
5. The device according to any one of aspects 1-4, the method including a further step of checking the available source voltage before the step of ramping up the first heating element power, wherein the device is configured to abort the method for determining power values when the available source voltage is below a second predetermined minimum voltage, preferably when the available source voltage is below 4.0 Volt, preferably below 3.8 Volt, more preferably below 3.1 Volt.
6. A device for amplifying and detecting biological material, e.g. loop-mediated isothermal amplification, of a biological sample, comprising a heating arrangement for heating the sample, the heating arrangement comprising a first heating element (RB), a second heating element (RR), a first controller (CRB) for the first heating element (RB), a second controller (CRR) for the second heating element (RR), an interface to a power source, the power source providing an available source voltage and an available source power to the device, wherein the device is configured to heat up the sample by a method comprising:
   - a step of heating up the first heating element (RB) based on a set first heating element power value as determined by a pulse width of current pulses for the first heating element (RB) and the second heating element (RR) based on a second heating element power as determined by a pulse width of current pulses for the second heating element (RR);
   - a step of calculating or retrieving a temperature inflection point for the first heating element (RB) and/or calculating or retrieving a pulse width reduction rate to be applied upon reaching a first predetermined temperature;
   - a step of checking a present temperature in the heating arrangement;
   - a step of incrementally decreasing the pulse width of current pulses for the first heating element (RB) upon the present temperature reaching the temperature inflection point and/or upon reaching the first predetermined temperature;
   - iterating the steps of checking the present temperature and incrementally decreasing the pulse width of the first heating element (RB) until the present temperature in the heating arrangement reaches a second predetermined temperature;
   - a step of decreasing the pulse width of current pulses for the first heating element (RB) in accordance with a predetermined value upon reaching a predetermined power threshold and/or the second predetermined temperature; and
   - controlling the second heating element power by the second controller, wherein the second controller is a PID controller, to maintain a predetermined target temperature of the biological sample.
7. The device according to any one of aspects 1-5, wherein the device is further configured to heat up the sample by a method comprising:
   - a step of heating up the first heating element (RB) based on the set first heating element power value as determined by the pulse width of current pulses for the first heating element (RB) and the second heating element (RR) based on the second heating element power as determined by the pulse width of current pulses for the second heating element (RR);
   - a step of calculating or retrieving a temperature inflection point for the first heating element (RB) and/or calculating or retrieving a pulse width reduction rate to be applied upon reaching a first predetermined temperature;
   - a step of checking a present temperature in the heating arrangement;
   - a step of incrementally decreasing the pulse width of current pulses for the first heating element (RB) upon the present temperature reaching the temperature inflection point and/or upon reaching the first predetermined temperature;
   - iterating the steps of checking the present temperature and incrementally decreasing the pulse width of the first heating element (RB) until the present temperature in the heating arrangement reaches a second predetermined temperature;
   - a step of decreasing the pulse width of current pulses for the first heating element (RB) in accordance with a predetermined value upon reaching a predetermined power threshold and/or the second predetermined temperature; and
   - controlling the second heating element power by the second controller, wherein the second controller is a PID controller, to maintain a predetermined target temperature.
8. The device according any one of aspects 6-7, wherein the device is further configured to:
   reach and maintain the predetermined target temperature in the heating arrangement;
   receive a container of the biological sample and associated reagents into the heating arrangement;
   equalise the temperature in the sample container to the predetermined target temperature in the heating arrangement;
   measure and store the background;
   measure and store the results over time;
   analyse the measurements; and
   display the result or error of the analysis.
9. The device according to any one of aspects 6-8, wherein the pulse width of current pulses for the second heating element (RR) has an initial duty cycle of at least 50%, more preferably at 100%.
10. The device according to aspect 9, wherein the method further comprises, after the step of checking the present temperature in the heating arrangement:
   maintaining the pulse width of current pulses for the second heating element (RR) at the initial duty cycle of 100% until reaching the first predetermined temperature.
11. A device according to any one of aspects 6-10, wherein the pulse width of current pulses for the first heating element (RB) is decreased so that the first heating element (RB) delivers 5% to 80% of the power necessary to maintain the predetermined target temperature of the biological sample.
12. The device according to any one of aspects 6-11, wherein the first predetermined temperature is 1 °C to 10 °C below, preferably 1 °C to 5 °C below, the predetermined target temperature.
13. The device according to any one of aspects 6-12, wherein the second predetermined temperature is within the range of from 0 °C to 10 °C below the target temperature, preferably within the range of from 2 °C to 4 °C, below the target temperature.
14. The device according to any one of aspects 6-13, wherein the predetermined first heating element power value is less than 80%, preferably 50%, of the set first heating element power value.
15. The device according to any one of aspects 6-14, wherein the predetermined first heating element power value is less than 100%, preferably less than 80%, of the set second heating element power value.
16. The device according to any one of aspects 6-15, wherein the predetermined power threshold is at least 2 Watt, preferably 4 Watt.
17. The device according to any one of aspects 6-16, wherein the predetermined target temperature of the biological sample is within the range of from 55 °C to 80 °C, preferably within the range of from 60 °C to 75°C.
18. The device according to any one of aspects 8-17, wherein the temperature of the biological sample is equalised between 30 min to 60 min at a range of 60 °C to 70 °C, preferably at 64 °C.
19. The device according to any one of aspects 8-18, wherein the measurement is taken at set time intervals, preferably every minute, corrected for background and displayed or stored.
20. The device according to any one of aspects 1-19, further comprising a microcontroller and/or a memory.
21. The device according to any one of aspects 1-20, wherein the power source is a mobile device, a computer, solar panel, or a battery.
22. The device according to any one of aspects 1-21, wherein the power source supplies the source voltage and source power via a universal serial bus connector.
23. The device according to any one of aspects 1-22, further comprising a matrix-LCD or OLED display to display results of the analysis or indicate an error.
24. The device according to any one of aspects 1-23, wherein the results or the error are displayed on a smartphone, preferably in a dedicated app, preferably wherein the results or error are communicated to the smartphone by wireless transmission.
25. The device according to any one of aspects 1-24, wherein the device is for loop-mediated isothermal amplification.

## Claims

1. A device (100) for amplifying and detecting biological material in a biological sample, comprising a heating arrangement for heating the sample, the heating arrangement comprising a first heating element (RB), a second heating element (RR), a first controller (CRB) for the first heating element (RB), a second controller (CRR) for the second heating element (RR), an interface (106) to a power source (109), the power source (109) providing an available source voltage and an available source power to the device (100), wherein the device (100) is configured to determine power values for the heating elements (RB, RR) by a method comprising:
- a step of setting a second heating element power as determined by a predetermined pulse width of current pulses for the second heating element (RR);
- a step of ramping up a first heating element power as determined by a pulse width of current pulses for the first heating element (RB) by incrementally increasing the pulse width for the first heating element (RB);
- a step of checking the available source voltage after the step of ramping up the first heating element power;
- a step of checking whether the available source power decreases;
- a step of checking whether a predetermined maximum first heating element power value is reached;
- iterating the step of ramping up the first heating element power if the available source voltage is above a first predetermined minimum voltage, and the available source power has not decreased, and the first heating element power is below the predetermined maximum first heating element power value; and
- a step of storing and setting a present first heating element power as a set first heating element power value when at least one of the following conditions is fulfilled:
the available source voltage is below the first predetermined minimum voltage, or the available source power decreases, or the first heating element power reaches the predetermined maximum first heating element power value.

2. The device according to claim 1, wherein the predetermined maximum first heating element power value is at least 2.0 Watt.

3. The device according to claim 1 or 2, wherein the second heating element power is set to at least 0.1 Watt, preferably at least 1.0 Watt.

4. The device according to any one of claims 1-3, wherein the first predetermined minimum voltage is set to at least 3.1 Volt, preferably 3.8 Volt, more preferably 4.0 Volt.

5. The device according to any one of claims 1-4, the method including a further step of checking the available source voltage before the step of ramping up the first heating element power, wherein the device is configured to abort the method for determining power values when the available source voltage is below a second predetermined minimum voltage, preferably when the available source voltage is below 4.0 Volt, preferably below 3.8 Volt, more preferably below 3.1 Volt.

6. A device (200) for amplifying and detecting biological material in a biological sample, comprising a heating arrangement for heating the sample, the heating arrangement comprising a first heating element (RB), a second heating element (RR), a first controller (CRB) for the first heating element (RB), a second controller (CRR) for the second heating element (RR), an interface (106) to a power source (109), the power source (109) providing an available source voltage and an available source power to the device (200), wherein the device (200) is configured to heat up the sample by a method comprising:
- a step of heating up the first heating element (RB) based on a set first heating element power value as determined by a pulse width of current pulses for the first heating element (RB) and the second heating element (RR) based on a second heating element power as determined by a pulse width of current pulses for the second heating element (RR);
- a step of calculating or retrieving a temperature inflection point for the first heating element (RB) and/or calculating or retrieving a pulse width reduction rate to be applied upon reaching a first predetermined temperature;
- a step of checking a present temperature in the heating arrangement;
- a step of incrementally decreasing the pulse width of current pulses for the first heating element (RB) upon the present temperature reaching the temperature inflection point and/or upon reaching the first predetermined temperature;
- iterating the steps of checking the present temperature and incrementally decreasing the pulse width of the first heating element (RB) until the present temperature in the heating arrangement reaches a second predetermined temperature;
- a step of decreasing the pulse width of current pulses for the first heating element (RB) in accordance with a predetermined value upon reaching a predetermined power threshold and/or the second predetermined temperature; and
- controlling the second heating element power by the second controller (CRR), wherein the second controller is a PID controller, to maintain a predetermined target temperature of the biological sample.

7. The device according to any one of claims 1-5, wherein the device is further configured to heat up the sample by a method comprising:
- a step of heating up the first heating element (RB) based on the set first heating element power value as determined by the pulse width of current pulses for the first heating element (RB) and the second heating element (RR) based on the second heating element power as determined by the pulse width of current pulses for the second heating element (RR);
- a step of calculating or retrieving a temperature inflection point for the first heating element (RB) and/or calculating or retrieving a pulse width reduction rate to be applied upon reaching a first predetermined temperature;
- a step of checking a present temperature in the heating arrangement;
- a step of incrementally decreasing the pulse width of current pulses for the first heating element (RB) upon the present temperature reaching the temperature inflection point and/or upon reaching the first predetermined temperature;
- iterating the steps of checking the present temperature and incrementally decreasing the pulse width of the first heating element (RB) until the present temperature in the heating arrangement reaches a second predetermined temperature;
- a step of decreasing the pulse width of current pulses for the first heating element (RB) in accordance with a predetermined value upon reaching a predetermined power threshold and/or the second predetermined temperature; and
- controlling the second heating element power by the second controller, wherein the second controller is a PID controller, to maintain a predetermined target temperature.

8. The device according any one of claims 6 or 7, wherein the device is further configured to:
reach and maintain the predetermined target temperature in the heating arrangement;
receive a container (107) of the biological sample and associated reagents into the heating arrangement;
equalise the temperature in the container (107) to the predetermined target temperature in the heating arrangement;
measure a background and store the respective measurement value;
perform a plurality of measurements on the sample over time and store the respective measurement values;
analyse the measurement values; and
display a result of the analysis.

9. The device according to any one of claims 6-8, wherein the method further comprises, after the step of checking the present temperature in the heating arrangement:
maintaining the pulse width of current pulses for the second heating element (RR) at the initial duty cycle of 100% until reaching the first predetermined temperature.

10. A device according to any one of claims 6-9, wherein the pulse width of current pulses for the first heating element (RB) is decreased so that the first heating element (RB) delivers 5% to 80% of the power necessary to maintain the predetermined target temperature of the biological sample.

11. The device according to any one of claims 6-10, wherein the first predetermined temperature is 1 °C to 10 °C below, preferably 1 °C to 5 °C below, the predetermined target temperature.

12. The device according to any one of claim 6-11, wherein the second predetermined temperature is within the range of from 0 °C to 10 °C below the target temperature, preferably within the range of from 2 °C to 4 °C, below the target temperature.

13. The device according to any one of claims 6-12, wherein the predetermined power threshold is at least 2 Watt, preferably at 4 Watt.

14. The device according to any one of claims 6-13, wherein the temperature of the biological sample is equalised between 30 min to 60 min at a range of 60 °C to 70 °C, preferably at 64 °C.

15. The device according to any one of claims 1-14, wherein the power source (109) is a mobile device, a computer, solar panel, or a battery, and/or wherein the power source supplies the source voltage and source power via a bus connector, in particular via a universal serial bus connector.
